# EUROPEAN PATENT APPLICATION

(11) **EP 4 592 578 A1**
(43) Date of publication of application: **30.07.2025**
(21) Application number: 24208303.8
(22) Date of filing: 23.10.2024
(51) Int. Cl.: F16M 11/24, G03B 17/56

(54) **BRACKET AND AUXILIARY PHOTOGRAPHING DEVICE THEREOF**

(30) Priority: 24.01.2024 CN 202420177431 U
(71) Applicant: Wellpa Precision Mold (Shenzhen) Co., Ltd., Shenzhen, Guangdong (CN)
(72) Inventor: Wang, Xing, Baoan District, Shenzhen (CN)
(74) Representative: Herrero & Asociados, S.L.

(57) **Abstract**

A bracket and an auxiliary photographing device thereof are provided. The bracket includes a main rod, a key installed in a bottom of the main rod, an elastic portion installed on the main rod, and a plurality of legs rotatably connected to the main rod; a first clamping member formed at a side of each of the plurality of legs that faces the main rod, a second clamping member formed at a portion of the key facing each leg and engaged with the first clamping member, the elastic portion elastically pressed against a side of each of the plurality of legs that faces the main rod when the plurality of legs is gathered up together. The key is pressed to drive the second clamping member to move, to cause the first clamping member being detachable from the second clamping member, so that the elastic portion is no longer constrained by the first and second clamping members.

## Description

### BACKGROUND

### 1. Technical Field

The present disclosure generally relates to the technical field of auxiliary photographing devices, and especially relates to a bracket and an auxiliary photographing device thereof.

### 2. Description of Related Art

An auxiliary photographing device usually includes a bracket including a main rod and a plurality of supporting legs arranged around an outer circumference of the main rod. The plurality of supporting legs is hinged to the main rod so that the plurality of supporting legs can rotate relative to the main rod to be gathered up for forming a support structure thereof.

In order to prevent the plurality of supporting legs from rotating relative to the main rod under an action of an external force, in a conventional auxiliary photographing device, a key is usually arranged on a bottom of the main rod. A first clamping member is arranged on each of the plurality of supporting legs and a second clamping member is arranged on the key. When the plurality of supporting legs is gathered up, the first clamping member is cooperated with the second clamping member to lock each of the plurality of supporting legs. When the key is triggered, the plurality of supporting legs will be unlocked, at this time, a user can remove the plurality of supporting legs so that the supporting structure can be formed by the plurality of supporting legs.

It needs to fix the auxiliary photographing device, press the key and open the plurality of supporting legs during unfolding the plurality of supporting legs, so that users usually need to clamp the auxiliary photographing device with their upper arms, press the key with one hand, and remove each of the plurality of supporting legs with the other hand, which is inconvenient and has a poor user experience thereof.

### SUMMARY

The technical problems to be solved: in view of the shortcomings of the related art, the present disclosure provides a bracket and an auxiliary photographing device thereof which can solve the problem that conventional supporting legs are inconveniently unfolded in the related art.

In a first aspect, a bracket according to an embodiment of the present disclosure includes: a main rod, a plurality of legs arranged around an outer circumference of the main rod, wherein the plurality of legs is rotatably connected to the main rod, so that the plurality of legs can rotate relative to the main rod to be opened or be gathered up; a first clamping member formed at a side of each of the plurality of legs that faces the main rod; a key arranged on a bottom of the main rod, a second clamping member formed at a portion of the key facing each of the plurality of legs and engaged with the first clamping member to lock the plurality of legs, wherein the key is movably connected to the main rod along an axial direction of the main rod, and is configured to disengage the first clamping member and the second clamping member when the key is triggered; and wherein an elastic portion is arranged on the main rod and is elastically pressed against a side of each of the plurality of legs that faces the main rod when the plurality of legs is gathered up together.

Wherein the elastic portion includes: a base arranged on the bottom of the main rod; a plurality of elastic arms, one end of each of the plurality of elastic arms connected to the base, and the other end of each of the plurality of elastic arms pressed against the side of each of the plurality of legs that faces the main rod; and wherein the base is integrated with the plurality of elastic arms.

Wherein each of the plurality of elastic arms includes: a connecting portion, one end of the connecting portion connected to the base, and the other end of the connecting portion extending along a direction away from a top of the main rod; a deformation portion, one end of the deformation portion connected to the other end of the connecting portion; and a crimping portion spaced apart from the connecting section along a radial direction of the main rod, one end of the crimping portion connected to the other end of the deformation portion and the other end of the crimping portion extending towards the top of the main rod, wherein the crimping portion is configured to elastically press against the side of each of the plurality of legs that faces the main rod when the plurality of legs is gathered up together.

Wherein the number of elastic arms is equal to or greater than a double of the number of legs, so that each of the plurality of legs is elastically pressed against at least two of the plurality of elastic arms.

Wherein a narrowing portion is arranged at the bottom of each of the plurality of legs and extends towards the key, the first clamping member is a groove arranged on a top wall of the narrowing portion, and the second clamping member is a barb connected to the key.

Wherein the groove includes an arc-shaped wall that is in contact with the barb, the barb including a hooking surface that is in contact with the wall, the hooking surface adapted to a shape of the wall, and a central angle corresponding to the hook surface smaller than a central angle corresponding to the wall.

Wherein the barb is integrated with the key.

Wherein the bracket further includes a seat and a first screwing member, the seat arranged on the bottom of the main rod and including a through-hole arranged radially along the main rod, a screwing post arranged on a side of the key that faces the top of the main rod, and passing through the through-hole, wherein a tail of the first screwing member is inserted into the screwing post and the through-hole, so that the key is movably connected to the main rod along the axial direction of the main rod.

Wherein the bracket further includes a spring clamped between the seat and the key.

In a second aspect, an auxiliary photographing device according to an embodiment of the present disclosure includes the bracket above mentioned in the first aspect.

Compared to the related art, the present disclosure provides the advantages as below: the present disclosure provides the bracket that includes the main rod, the key, the elastic portion and the plurality of legs, the plurality of legs arranged around an outer circumference of the main rod, wherein the plurality of legs is rotatably connected to the main rod, and the first clamping member formed at the side of each of the plurality of legs that faces the main rod; the key arranged on the bottom of the main rod, the second clamping member formed at a portion of the key facing each of the plurality of legs and engaged with the first clamping member to lock the plurality of legs; the elastic portion is arranged on the main rod and is elastically pressed against a side of each of the plurality of legs that faces the main rod when the plurality of legs is gathered up together. Specially, the key is pressed to drive the second clamping member to move, to cause the first clamping member being detachable from the second clamping member, so that the elastic portion is no longer constrained by the first and second clamping members. Therefore, the elastic portion will release energy and release the plurality of legs, that is, it is only to press the key, the plurality of legs is automatically pop open, which is very conveniently used, rather than requiring one hand to press the key and the other hand to remove the legs in the related art.

### BRIEF DESCRIPTION OF THE DRAWINGS

In order to more clearly understand the technical solution hereinafter in embodiments of the present disclosure, a description of the present disclosure will now be made in detail with reference to the accompanying drawings and embodiments, examples. In the drawings:
FIG. 1 is a schematic view of an auxiliary photographing device in accordance with an embodiment of the present disclosure.
FIG. 2 is similar to FIG. 1, but shown the auxiliary photographing device in a variation state.
FIG. 3 is an enlarged view of a circle A of FIG. 2.
FIG. 4 is a schematic view of a bracket in accordance with an embodiment of the present disclosure.
FIG. 5 is an enlarged view of a circle B of FIG. 5.
FIG. 6 is a schematic view of a key of the bracket of FIG. 4.
FIG. 7 is an assembly schematic view of the key, an elastic portion, a seat and a first screwing member of the bracket of FIG. 4.
FIG. 8 is an exploded, schematic view of the key and the seat of FIG. 7.
FIG. 9 is a cross sectional view of FIG. 7.

The element labels according to the exemplary embodiment of the present disclosure shown as below:
1000 auxiliary photographing device, 100 bracket, 10 main rod, 101 bottom, 102 top, 11 key, 111 second clamping member, 1111 barb, 11111 hooking surface, 11112 chamfer, 1113 bottom surface, 1114 outer side surface, 112 screwing post, 12 elastic portion, 121 base, 1211 installation hole, 122 elastic arm, 12201 one end, 12202 the other end, 1221 connecting portion, 12211 one end, 12212 the other end, 1222 deformation portion, 12221 one end, 12222 the other end, 1223 crimping portion, 12231 protrusion, 12232 one end, 12233 the other end, 13 leg, 1301 side, 1302 bottom, 131, first clamping member, 1311 groove, 13111 wall, 132 narrowing portion, 1321 top wall, 14 seat, 141 through-hole, 142 screwing hole, 15 first screwing member, 151 tail, 152 head, 16 spring, a central angle, b central angle, 200 fixing member, 20 clamping block.

### DETAILED DESCRIPTION

It should be noted that embodiments and features in the embodiments of the present disclosure can be combined with each other without conflict. Reference will now be made in detail to embodiments, examples of which are illustrated in the accompanying drawings.

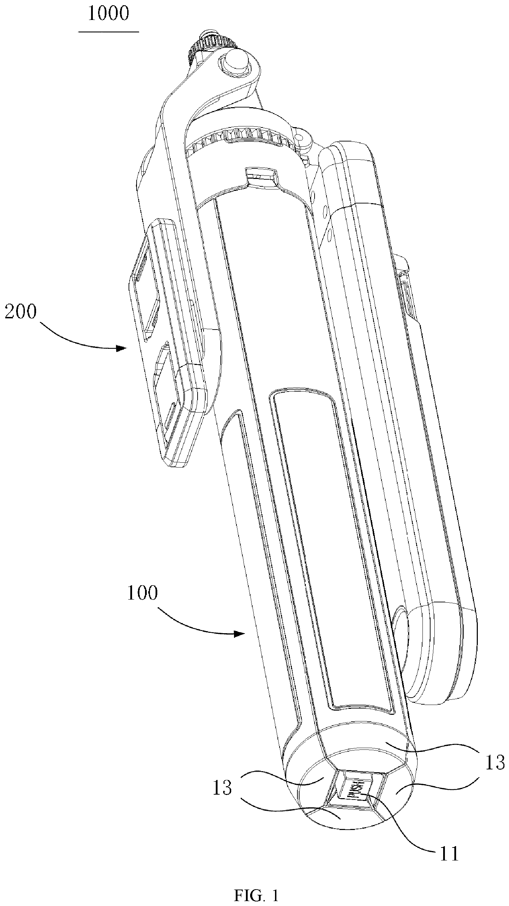

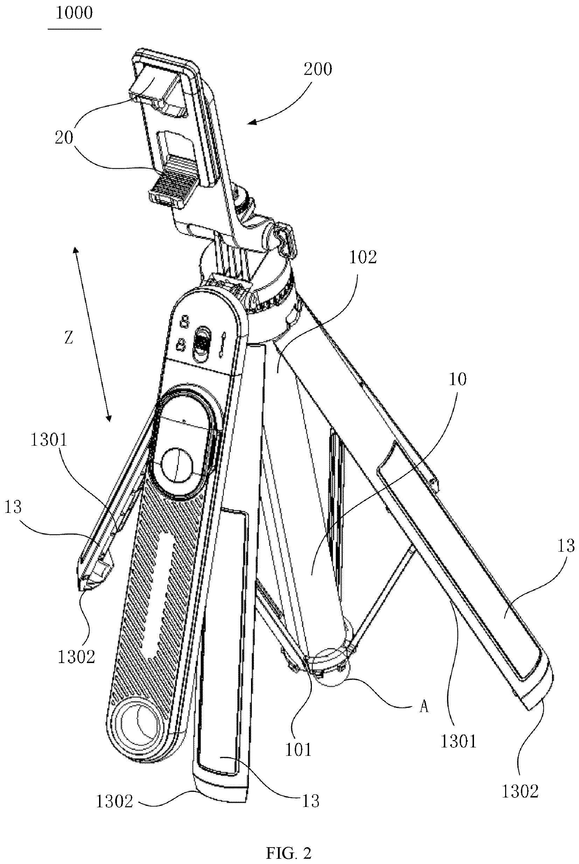

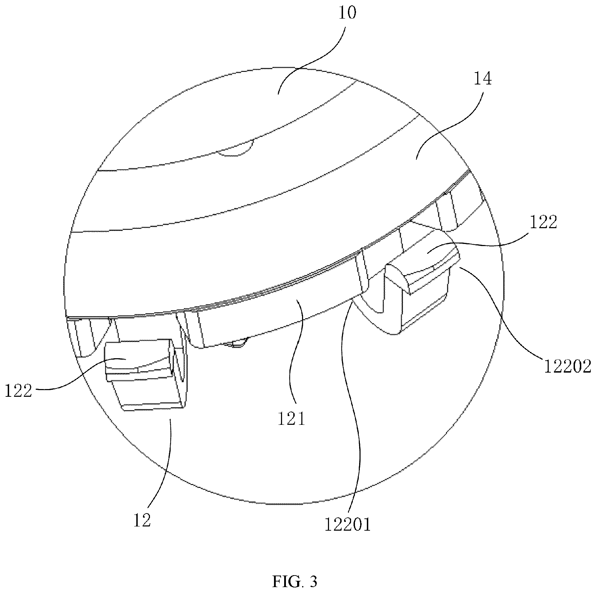

Referring to FIG. 1 to FIG. 6, a bracket 100 according to an embodiment of the present disclosure is provided. The bracket 100 includes a main rod 10, a key 11, an elastic portion 12 and a plurality of legs 13. The plurality of legs 13 is arranged around an outer circumference of the main rod 10 and rotatably connected to the main rod 10. In this way, when it needs the plurality of legs 13 to be supported, the plurality of legs 13 can be rotated along a forward direction to be unfolded for forming a support structure. After the plurality of legs 13 is completely used, the plurality of legs 13 can be rotated along a reverse direction to be gathered up. The key 11 is arranged on a bottom of the main rod 10 and a first clamping member 131 is formed at a side of each of the plurality of legs 13 that faces the main rod 10. A second clamping member 111 is formed at a portion of the key 11 facing each of the plurality of legs 13 and is engaged with the first clamping member 131 to lock the plurality of legs 13. The key 11 is movably connected to the main rod 10 along an axial direction (a Z direction shown in FIG. 2) of the main rod 10, and is pressed to drive the second clamping member 111 to move, to cause the first clamping member 131 being detachable from the second clamping member 111. The elastic portion 12 is arranged on the main rod 10 and is elastically pressed against a side of each of the plurality of legs 13 that faces the main rod 10 when the plurality of legs 13 is gathered up together.

Specifically, the elastic portion 12 can be elastically pressed against the side of plurality of legs 13 facing the main rod 10 when the plurality of legs 13 is gathered up. The first clamping member 131 and the second clamping member 111 being in an engaged state when the plurality of legs 13 is gathered up, so that the elastic portion 12 can't release its energy. When the key 11 is pressed, thereby causing the first clamping member 131 to disengage from the second clamping member 111, so that the elastic portion 12 is no longer constrained by the first clamping member 131 and the second clamping member 111. Therefore, the elastic portion 12 will release its energy to unfold the plurality of legs 13. That is, it is only to press the key 11, the plurality of legs 13 is automatically pop open, which is very conveniently used, rather than requiring one hand to press the key 11 and the other hand to remove the legs 13 in the related art.

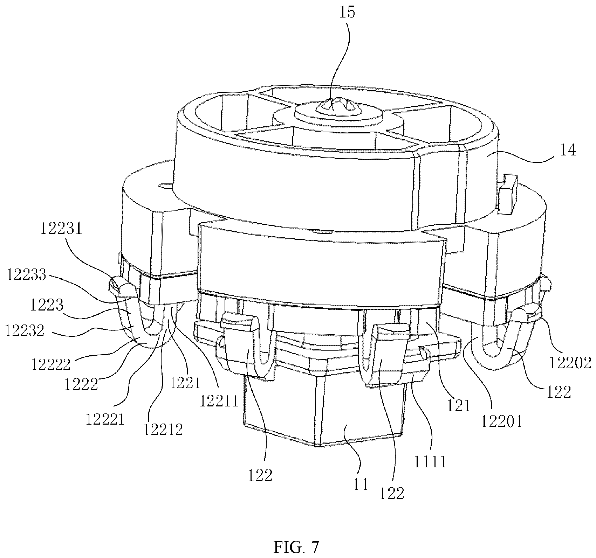

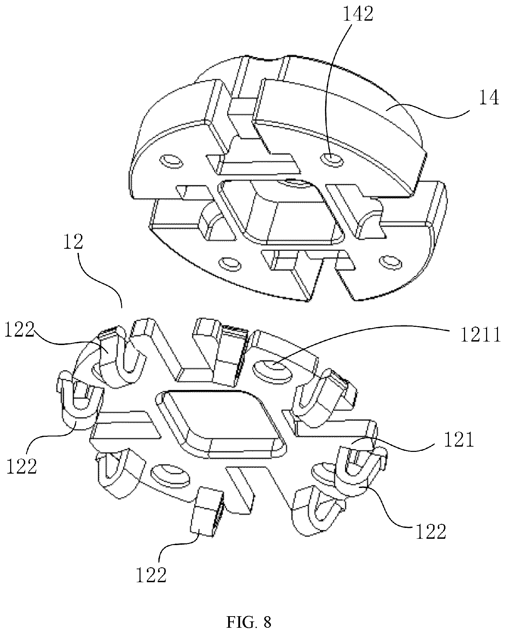

Referring to FIG. 7 and FIG. 8, in a specific embodiment of the present disclosure, the elastic portion 12 includes a base 121 and a plurality of elastic arms 122. The base 121 is arranged on a bottom 101 of the main rod 10, and the plurality of elastic arms 122 is uniformly distributed on the base 121 along a circumferential direction of the main rod 10. One end 12201 of each of the plurality of elastic arms 122 is connected to the base 121, and the other end 12202 of each of the plurality of elastic arms 122 is pressed against the side 1301 of each of the plurality of legs 13 that faces the main rod 10. The plurality of elastic arms 122 is configured to press against the side 1301 of each of the plurality of legs 13 that faces the main rod 10, and the base 121 is integrated with the plurality of elastic arms 122.

Specifically, the base 121 and the plurality of elastic arms 122 integrated with each other can effectively reduce the number of components, which not only reduces complexity of the elastic portion 12, but also lowers assembly and production costs.

Referring to FIG. 7, in a specific embodiment of the present disclosure, each of the plurality of elastic arms 122 includes a connecting portion 1221, a deformation portion 1222 and a crimping portion 1223. One end 12211 of the connecting portion 1221 is connected to the base 121, and the other end 12212 of the connecting portion 1221 extends along a direction away from a top 102 of the main rod 10. The crimping portion 1223 is spaced apart from the connecting section 1221 along a radial direction of the main rod 10, one end 12232 of the crimping portion 1223 connected to the other end 12222 of the deformation portion 1222 and the other end 12233 of the crimping portion 1223 extending towards the top 102 of the main rod 10, wherein the crimping portion 1223 is configured to elastically press against the side 1301 of each of the plurality of legs 13 that faces the main rod 10 when the plurality of legs 13 is gathered up together.

Specifically, because the crimping portion 1223 is spaced apart from the connecting portion 1221 along the radial direction of the main rod 10, so that a deformation space is formed between the crimping portion 1223 and the connecting portion 1221. Therefore, when the plurality of legs 13 is rotated along the reverse direction to be gathered up, the side 1301 of each of the plurality of legs 13 that faces the main rod 10 can press against the crimping portion 1223 to drive the crimping portion 1223 to move close to the connecting portion 1221. At this time, the deformation portion 1222 will undergo elastic deformation, causing the elastic arm 122 to store energy. When the key 11 is pressed, the deformation portion 1222 releases its energy, thereby causing the crimping portion 1223 to move away from the connection portion 1221. Furthermore, because the crimping portion 1223 abuts against the side 1301 of each of the plurality of legs 13 facing the main rod 10, the plurality of legs 13 will pop open when the crimping section 1223 moves, in this way, it does not need to press the key 11 by one hand and remove the plurality of legs 13 by the other hand in the related art, which is very conveniently used.

Referring to FIG. 7 and FIG. 8, in a specific embodiment of the present disclosure, the number of elastic arms 122 is equal to or greater than a double of the number of legs 13, so that each of the plurality of legs 13 can elastically press against at least two of the plurality of elastic arms 122. In this way, when pressing the key 11, the elastic portion 12 will apply more sufficient elasticity to each of the plurality of legs 13, so as to ensure that each of the plurality of legs 13 can be bounced open.

Referring to FIG. 7, in a specific embodiment of the present disclosure, the crimping portion 1223 gradually extends from the end 12232 of the crimping portion 1223 that is connected to the deformation portion 1222 towards the top 102 of the main rod 10 and away from a centerline of the main rod 10, that is, an angle is formed between an extension direction of the crimping portion 1223 and the axial direction of the main rod 10, and the end 12233 of the crimping portion 1223 away from the deformation portion 1222 is provided with a protrusion 12231 protruding towards the leg 13. Such setting is beneficial for applying more sufficient elasticity to the leg 13, for further ensuring that the leg 13 can be bounced open by the crimping portion 1223.

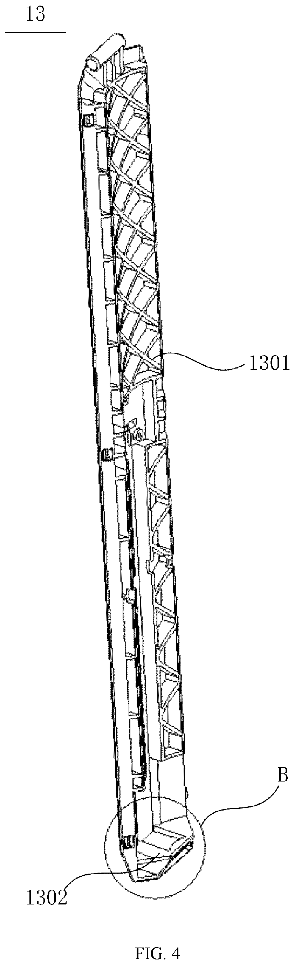

Referring to FIG. 4 to FIG. 6, in a specific embodiment of the present disclosure, a narrowing portion 132 is arranged at the bottom 1302 of each of the plurality of legs 13 and extends towards the key 11, the first clamping member 131 is a groove 1311 arranged on a top wall 1321 of the narrowing portion 132, and the second clamping member 111 is a barb 1111 connected to the key 11.

Specifically, when the plurality of legs 13 is in a storage state, the barb 1111 will hook the wall 13111 of the groove 1311 to prevent the plurality of legs 13 from rotating relative to the main rod 10, thereby locking the plurality of legs 13. After the key 11 is pressed, the barb 1111 will gradually move towards the top 102 of the main rod 10 until the barb 1111 disengages from the groove 1311 to unlock the plurality of legs 13.

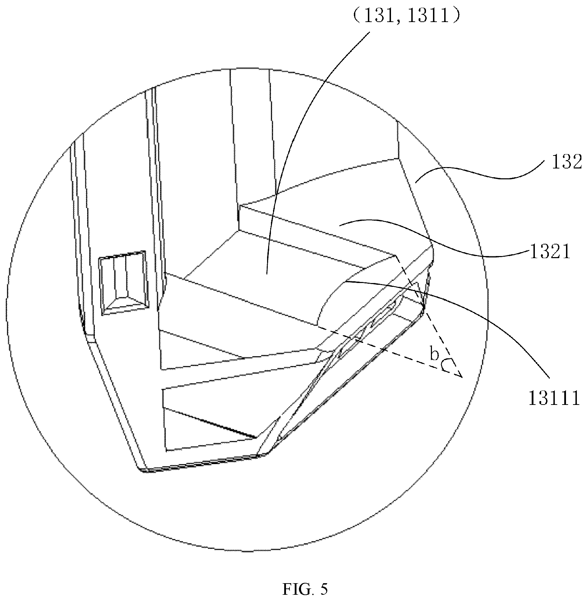

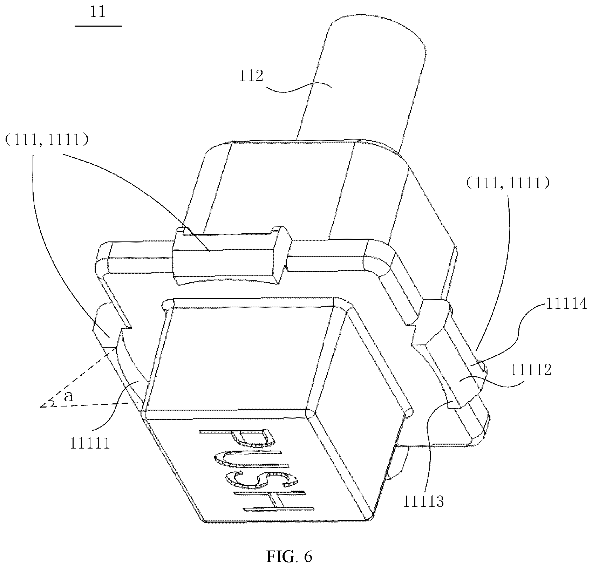

Referring to FIG. 5 and FIG. 6, in a specific embodiment of the present disclosure, the groove 1311 includes an arc-shaped wall 13111 that is in contact with the barb 1111, the barb 1111 including a hooking surface 11111 that is in contact with the wall 13111, the hooking surface 11111 adapted to a shape of the wall 13111, and a central angle a corresponding to the hook surface 11111 smaller than a central angle b corresponding to the wall 13111.

Specifically, the arc-shaped wall 13111 is provided and the hook surface 11111 is adapted to the shape of the wall 13111, and the central angle a of the hook surface 11111 is smaller than that of the wall 13111. Therefore, even if a rotation angle of the key 11 is non-aligned during assembling the key 11, or the key 11 rotates under an action of an external force in a later stage, it can still ensure a good contact between the hook surface 11111 and the wall 13111.

Referring to FIG. 6, in a specific embodiment of the present disclosure, the barb 1111 is integrated with the key 11, which can effectively reduce the number of components, not only reducing the complexity of the elastic portion 12, but also lowering assembly and production costs thereof.

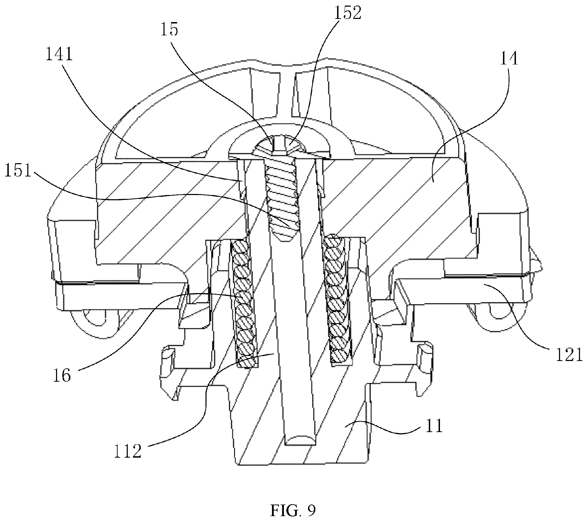

Referring to FIG. 7 and FIG. 9, in a specific embodiment of the present disclosure, the bracket 1000 further includes a seat 14 and a first screwing member 15, the seat 14 arranged on the bottom 101 of the main rod 10 and including a through-hole 141 arranged radially along the main rod 10, a screwing post 112 arranged on a side of the key 11 that faces the top 102 of the main rod 10, and passing through the through-hole 141, wherein a tail 151 of the first screwing member 15 is inserted into the screwing post 112 and the through-hole 14, so that the key 11 is movably connected to the main rod 10 along the axial direction of the main rod 10.

Specifically, by implementing the embodiment of the present disclosure, when pressing the key 11, the key 11 can move towards the top 102 of the main rod 10. At this time, the screwing post 112 slides along the through-hole 141 for guiding the screwing post 112. When the key 11 resets, a head 152 of the first screwing member 15 abuts against the seat 14 to ensure that the key 11 does not separate from the seat 14.

In a specific embodiment of the present disclosure, the bracket 100 further includes a spring 16 clamped between the seat 14 and the key 11. In this way, when the pressure applied on the key 11 is stopped, a deformation of the spring 16 can be configured to drive the key 11 to reset.

In order to avoid displacement from being occurred on the spring 16 after the spring is used repeatedly, or even lead to the spring failure, in the specific embodiment, the spring 16 is sleeved on the screwing post 112. By setting it this way, the screwing post 112 can limit a position of the spring 16, thereby avoiding a deviation from being occurred on the spring 16 after the spring 16 is used for many times.

Referring to FIG. 6, in a specific embodiment of the present disclosure, the barb 1111 includes a bottom surface 11113 and an outer side surface 1114 connected to the bottom surface 11113. A chamfer 11112 is formed at connection position that the outer side surface 11114 is connected to the bottom surface 11113. Therefore, when the plurality of legs 13 is gathered up, the narrowing portion 132 can be matched with the chamfer 11112 to drive the key 11 to move. When the plurality of legs 13 is gathered up to a position where the barb 1111 is opposite to the groove 1311, the spring 16 will release energy to drive the barb 1111 to extend into the groove 1311, which is very conveniently used.

Referring to FIG. 8, in a specific embodiment of the present disclosure, the base 121 is installed at a bottom 143 of the seat 14, an installation hole 1211 formed on the base 121, and a screwing hole 142 arranged on the seat 14 and corresponding to the installation hole 1211. The bracket 100 also includes a second screwing member (not shown) sequentially inserted into the installation hole 1211 and the screwing hole 142 to connect the base 121 and the seat 14.

Specifically, the second screwing member is provided to connect the seat 14 and the base 121, which can provide a high connection strength between the seat 14 and the base 121, and have relatively low assembly and maintenance costs thereof.

Referring to FIG. 8, in a specific embodiment of the present disclosure, the installation hole 1211 is a countersunk hole, which can prevent the second screwing member from protruding out of the base 121, thereby improving an aesthetics thereof.

Referring to FIG. 1 to FIG. 6, an auxiliary photographing device 1000 according to an embodiment of the present disclosure includes the bracket 100 above mentioned. The bracket 100 includes a main rod 10, a key 11, an elastic portion 12 and a plurality of legs 13. The plurality of legs 13 is arranged around an outer circumference of the main rod 10 and rotatably connected to the main rod 10. In this way, when it needs the plurality of legs 13 to be supported, the plurality of legs 13 can be rotated along a forward direction to be unfolded for forming a support structure. After the plurality of legs 13 is completely used, the plurality of legs 13 can be rotated along a reverse direction to be gathered up. The key 11 is arranged on a bottom 101 of the main rod 10 and a first clamping member 131 is formed at a side 1301 of each of the plurality of legs 13 that faces the main rod 10. A second clamping member 111 is formed at a portion of the key 11 facing each of the plurality of legs 13 and is engaged with the first clamping member 131 to lock the plurality of legs 13. The key 11 is movably connected to the main rod 10 along an axial direction of the main rod 10, and is pressed to drive the second clamping member 111 to move, to cause the first clamping member 131 being detachable from the second clamping member 111. The elastic portion 12 is arranged on the main rod 10 and is elastically pressed against the side 1301 of each of the plurality of legs 13 that faces the main rod 10 when the plurality of legs 13 is gathered up together.

Specifically, the elastic portion 12 can be elastically pressed against the side 1301 of plurality of legs 13 facing the main rod 10 when the plurality of legs 13 is gathered up. The first clamping member 131 and the second clamping member 111 being in an engaged state when the plurality of legs 13 is gathered up, so that the elastic portion 12 can't release its energy. When the key 11 is pressed, thereby causing the first clamping member 131 to disengage from the second clamping member 111, so that the elastic portion 12 is no longer constrained by the first clamping member 131 and the second clamping member 111. Therefore, the elastic portion 12 will release its energy to unfold the plurality of legs 13. That is, it is only to press the key 11, the plurality of legs 13 is automatically pop open, which is very conveniently used, rather than requiring one hand to press the key 11 and the other hand to remove the legs 13 in the related art.

Referring to FIG. 2, in a specific embodiment of the present disclosure, the auxiliary photographing device 1000 includes a fixing member 200 installed on the top of the main rod 10 and configured to fix a shooting terminal thereof.

In a specific embodiment of the present disclosure, the fixing member 200 includes a magnetic element (not shown) configured to fix the shooting terminal to the auxiliary photographing device 1000, which has advantages that it can be easily installed and removed the shooting terminal, and can be adapted to shooting terminals with different sizes.

Referring to FIG. 2, in another specific embodiment of the present disclosure, the fixing member 200 includes a pair of clamping blocks 20 opposite to each other and spaced apart from each other, so that users can clamp the shooting terminal by using the pair of clamping blocks 20. Advantages of the embodiment are that it can stably hold the shooting terminal and prevent the shooting terminal from falling off from the fixing member 200, and effectively reduce probability of the shooting terminal from being damaged.

Furthermore, the pair of clamping blocks 20 is slidably connected to each other, so that the pair of clamping blocks 20 can slide away from or towards each other. The fixing member 200 also includes an elastic member (not shown) connected to the pair of clamping blocks 20 and configured to perform deformation energy storage when the pair of clamping blocks 20 slide away from each other.

By implementing the embodiment of the present disclosure, the pair of clamping blocks 20 can be used to clamp shooting terminals with different sizes, which can increase a versatility of the fixing member 200. Specifically, users can first pry open the pair of clamping blocks 20, and place the shooting terminal between the pair of clamping blocks 20, and then release the pair of clamping blocks 20. At this time, under an action of energy release of the elastic member, the pair of clamping blocks 20 will move towards to each other to clamp the shooting terminal therebetween.

The specific embodiments of the present disclosure are described in detail above in combination with the accompanying drawings, but not limited to the above embodiments. Various changes can also be made within the knowledge of an ordinary skilled person in the art without departing from the purpose of the present disclosure, each feature or element can be used alone or in other various combinations within the principles of the present disclosure to the full extent indicated by the broad general meaning of the terms in which the appended claims are expressed.

## Claims

1. A bracket comprising:
a main rod;
a plurality of legs arranged around an outer circumference of the main rod, wherein the plurality of legs is rotatably connected to the main rod, so that the plurality of legs can rotate relative to the main rod to be opened or be gathered up; a first clamping member formed at a side of each of the plurality of legs that faces the main rod;
a key arranged on a bottom of the main rod, a second clamping member formed at a portion of the key facing each of the plurality of legs and engaged with the first clamping member to lock the plurality of legs, wherein the key is movably connected to the main rod along an axial direction of the main rod, and is configured to disengage the first clamping member and the second clamping member when the key is triggered; and wherein
an elastic portion is arranged on the main rod and is elastically pressed against a side of each of the plurality of legs that faces the main rod when the plurality of legs is gathered up together.

2. The bracket as claimed in claim 1, wherein the elastic portion comprises:
a base arranged on the bottom of the main rod;
a plurality of elastic arms, one end of each of the plurality of elastic arms connected to the base, and the other end of each of the plurality of elastic arms pressed against the side of each of the plurality of legs that faces the main rod; and wherein
the base is integrated with the plurality of elastic arms.

3. The bracket as claimed in claim 2, wherein each of the plurality of elastic arms comprises:
a connecting portion, one end of the connecting portion connected to the base, and the other end of the connecting portion extending along a direction away from a top of the main rod;
a deformation portion, one end of the deformation portion connected to the other end of the connecting portion; and
a crimping portion spaced apart from the connecting section along a radial direction of the main rod, one end of the crimping portion connected to the other end of the deformation portion and the other end of the crimping portion extending towards the top of the main rod, wherein the crimping portion is configured to elastically press against the side of each of the plurality of legs that faces the main rod when the plurality of legs is gathered up together.

4. The bracket as claimed in claim 2, wherein the number of elastic arms is equal to or greater than a double of the number of legs, so that each of the plurality of legs is elastically pressed against at least two of the plurality of elastic arms.

5. The bracket as claimed in claim 4, wherein a narrowing portion is arranged at the bottom of each of the plurality of legs and extends towards the key, the first clamping member is a groove arranged on a top wall of the narrowing portion, and the second clamping member is a barb connected to the key.

6. The bracket as claimed in claim 5, wherein the groove comprises an arc-shaped wall that is in contact with the barb, the barb comprising a hooking surface that is in contact with the wall, the hooking surface adapted to a shape of the wall, and a central angle corresponding to the hook surface smaller than a central angle corresponding to the wall.

7. The bracket as claimed in claim 5, wherein the barb is integrated with the key.

8. The bracket as claimed in claim 1, wherein the bracket further comprises a seat and a first screwing member, the seat arranged on the bottom of the main rod and comprising a through-hole arranged radially along the main rod, a screwing post arranged on a side of the key that faces the top of the main rod, and passing through the through-hole, wherein a tail of the first screwing member is inserted into the screwing post and the through-hole, so that the key is movably connected to the main rod along the axial direction of the main rod.

9. The bracket as claimed in claim 8, wherein the bracket further comprises a spring clamped between the seat and the key.

10. An auxiliary photographing device comprising a bracket and a fixing member connected to the bracket, wherein the bracket comprises:
a main rod;
a plurality of legs arranged around an outer circumference of the main rod, wherein the plurality of legs is rotatably connected to the main rod, so that the plurality of legs can rotate relative to the main rod to be opened or be gathered up; a first clamping member formed at a side of each of the plurality of legs that faces the main rod;
a key arranged on a bottom of the main rod, a second clamping member formed at a portion of the key facing each of the plurality of legs and engaged with the first clamping member to lock the plurality of legs, wherein the key is movably connected to the main rod along an axial direction of the main rod, and is configured to disengage the first clamping member and the second clamping member when the key is triggered; and wherein
an elastic portion is arranged on the main rod and is elastically pressed against a side of each of the plurality of legs that faces the main rod when the plurality of legs is gathered up together.

11. The auxiliary photographing device as claimed in claim 10, wherein the fixing member connected to a top of the main rod and comprises a pair of clamping blocks 20 opposite to each other and spaced apart from each other.
